# EUROPEAN PATENT SPECIFICATION

(11) **EP 3 663 419 B1**
(45) Date of publication and mention of the grant of the patent: **09.02.2022**
(21) Application number: 18868910.3
(22) Date of filing: 31.08.2018
(51) Int. Cl.: C22B 21/06, C22B 7/00, C22B 9/10, C22C 21/02

(54) **AL ALLOY RECOVERY METHOD**
VERFAHREN ZUR RÜCKGEWINNUNG VON AL-LEGIERUNGEN
PROCÉDÉ DE RÉCUPÉRATION D'ALLIAGE DE AL

(30) Priority: 20.10.2017 JP 2017203362
(43) Date of publication of application: 10.06.2020
(73) Proprietor: Kabushiki Kaisha Toyota Chuo Kenkyusho, Nagakute-shi, Aichi 480-1192 (JP)
(72) Inventor: MINOURA Takuma, Nagakute-shi, Aichi 480-1192 (JP); YAOKAWA Jun, Nagakute-shi, Aichi 480-1192 (JP); IWATA Yasushi, Nagakute-shi, Aichi 480-1192 (JP); KAWAHARA Hiroshi, Nagakute-shi, Aichi 480-1192 (JP); HIBI Kazuma, Nagakute-shi, Aichi 480-1192 (JP); UENO Noriyuki, Toyota-shi, Aichi 471-8571 (JP)
(74) Representative: Kramer Barske Schmidtchen Patentanwälte PartG mbB
(86) International application number: PCT/JP2018/032281
(87) International publication number: WO 2019/077892

(56) References cited:
- JP-A- H0 770 666
- JP-A- H0 873 959
- JP-A- H05 295 466
- JP-A- H08 199 257
- JP-A- 2005 501 968
- JP-A- 2006 511 705
- US-A- 3 374 089
- US-A- 3 537 695
- US-A- 3 900 313
- LIFENG ZHANG ET AL: "Removal of Iron From Aluminum: A Review", MINERAL PROCESSING AND EXTRACTIVE METALLURGY REVIEW, vol. 33, no. 2, 2 June 2011 (2011-06-02), pages 99-157, XP055751459, US ISSN: 0882-7508, DOI: 10.1080/08827508.2010.542211

## Description

### [Technical Field]

The present invention relates to a method of obtaining a recycled Al alloy from scrap and the like.

### [Background Art]

With the recent rise in environmental awareness and the like, various structural members and devices are being reduced in weight, and the used amount of aluminum alloy (simply referred to as "Al alloy") is increasing. A large amount of energy is required for the production (smelting) of new Al. In contrast, the energy required for remelting scrap of Al alloy is very little. It is thus desired to recycle scrap of Al alloy and use the recycled Al alloy.

When Al alloy scrap is remelted, some elements such as Fe, Si, Cu, Mg, and Zn are usually mixed in the melt. To obtain the recycled Al alloy from scrap, unnecessary elements (impurity elements) or excess elements have to be removed. Relevant descriptions of methods for removing such elements are found in the following documents.

### [Prior Art Documents]

### [Patent Documents]

[Patent Document 1] US2464610B
[Patent Document 2] US5741348B
[Patent Document 3] JP2002-155322A
[Patent Document 4] US4734127B
[Patent Document 5] WO2013/168213
[Patent Document 6] WO2013/168214

### [Non-Patent Documents]

[Non-Patent Document 1] Furukawa Electric Review, No. 104 (July 1999) 25-30
[Non-Patent Document 2] Metallurgical Transactions 5 (1974) 785-787
[Non-Patent Document 3] Material Transactions, JIM.38 (1997) 622-699

US 3 900 313 A discloses a process for producing die-casting alloys from aluminum scrap.

US 3 537 695 A discloses an apparatus for centrifuging.

US 3 374 089 A also relates to centrifugal separation.

### [Summary of Invention]

### [Technical Problem]

### (1) Intermetallic Compound Removal Method

Patent Documents 1 and 2 and Non-Patent Documents relate to a method of removing transition metal elements such as Fe as an intermetallic compound (also simply referred to as "IMC") from a melt. Specifically, Patent Document 1 discloses adding Cr, Mn, and Co to an Al-(11.6-13.5)%Si-(0.8-9)%Fe alloy to crystallize an Fe-based intermetallic compound to reduce the amount of Fe in the melt. Patent Document 2 discloses adding Mn to an Al-(0-12)%Si-(0.49-2.1)%Fe-(0.37-1.91)%Mn alloy (Cr<0.4%, Ti<0.41%, Zr<0.26%, Mo<0.01%) to reduce the amount of Fe. However, when Si is 8% or less, 0.5% or more of Fe remains in the melt even after the removal of the intermetallic compound, and the removal efficiency is low. Non-Patent Document 1 reports that Fe and Mn cannot be simultaneously reduced to 0.3% or less from an Al alloy melt (Fe<1.5%, Mn<1.5%, Si<10%, Cr<0.2%, Mg<1%, Cu<1%, Ti<0.1%, Ni<1%, Zn<1%). Unless otherwise stated, "%" as referred to in the present specification means mass%.

### (2) Segregation Solidification Method and Crystal Fractionation Method

Patent Documents 3 to 6 and Non-Patent Documents 1 and 2 relate to a segregation solidification method or a crystal fractionation method that includes crystallizing an Al phase from a melt to obtain a semi-solidified melt and separating the Al crystallized substance from the residual liquid phase to reduce impurities. In particular, Non-Patent Document 1 discloses pressurizing the semi-solidified melt to remove the residual liquid phase. Non-Patent Document 2 discloses stirring the semi-solidified melt to spheroidize the Al crystallized substance and separating it from the residual liquid phase. Such methods require cooling the melt until the Al phase crystallizes, and the energy loss is thus large.

### (3) Semi-molten Refining Method

Non-Patent Document 3 relates to a semi-molten refining method that includes heating an Al alloy (solid) to a semi-molten state to separate it into a liquid phase and residual Al crystals and removing impurities exceeding the solid solubility limit of the Al phase. Specifically, Non-Patent Document 3 discloses pressurizing an Al-8.39%Si-0.06%Mn-0.05%Mg alloy in a semi-molten state to separate a liquid phase and obtaining an Al-0.96%Si-1.14%Mn-1.56%Mg alloy from the residue. In this method, it is difficult to remove Fe and Mn via an intermetallic compound. Moreover, the amount of residual Al crystals in the semi-molten state depends on the temperature and, therefore, alloy compositions for which this method can be used are limited.

### (4) Zone Melting Method

Other methods than the above-described methods for removing impurities from an Al alloy include a zone melting method that includes partially heating/melting an ingot from its one end side to collect impurities on the other end side and enhancing the purity on the one end side from which the heating was started.

The present invention has been made in view of such circumstances and an object of the present invention is to provide a recycling method for an aluminum alloy capable of obtaining an Al alloy (melt) from which Fe and/or Si are efficiently removed by a different method than the conventional methods.

### [Solution to Problem]

As a result of intensive studies to achieve the above object, the present inventors have succeeded in the removal (concentration reduction) of Si and Fe contained in an Al alloy melt through melting scrap and the like into the melt and adding Cu to the melt to put the melt into a hypereutectic composition of Cu and Si (composition range in which Si phases crystallize from the melt prior to α-Al phases when the melt is cooled). Developing this achievement, the present inventors have accomplished the present invention, which will be described below.

### «Recycling Method for Aluminum Alloy»

(1) The present invention provides a recycling method for an aluminum alloy, comprising the features of claim 1. Further developments of the invention are recited in the dependent claims.
(2) According to the recycling method for an aluminum alloy (simply referred to as a "recycling method") of the present invention, the crystallized Si and the crystallized iron compound (simply referred to as an "Fe compound") can readily be removed from the first melt obtained by melting the Al alloy raw material, and the recycled Al alloy can be efficiently obtained with sufficiently reduced concentrations of the crystallized Si and the crystallized Fe compound. Moreover, the recycled Al alloy is obtainedy in a liquid-phase state (i.e., a melt state) rather than in a solid-phase state and can therefore be shipped or reused (such as casted) as a recycled bare metal without any processing such as remelting.

### «Others»

Unless otherwise stated, a numerical range "x to y" as referred to in the present specification includes the lower limit x and the upper limit y. Any numerical value included in various numerical values or numerical ranges described in the present specification may be selected or extracted as a new lower or upper limit, and any numerical range such as "a to b" can thereby be newly provided using such a new lower or upper limit.

### [Brief Description of Drawings]

FIG. 1 is a graph illustrating the relationship between a melt temperature or an Fe concentration in a liquid phase and a solid phase ratio.
FIG. 2 is a ternary phase diagram of Al-Si-Cu.
FIG. 3 is a graph illustrating the relationship between an initial Mn concentration and a reduced critical Fe concentration.
FIG. 4 is a set of SEM images of metallographic structures according to respective samples.

### [Embodiments for Carrying out the Invention]

One or more features freely selected from the present specification can be added to the above-described features of the present invention. In the content described in the present specification, methodological features can even be features regarding a product (such as a recycled Al alloy or a recycled Al alloy member).

### «Principle of Fe and Si Removal»

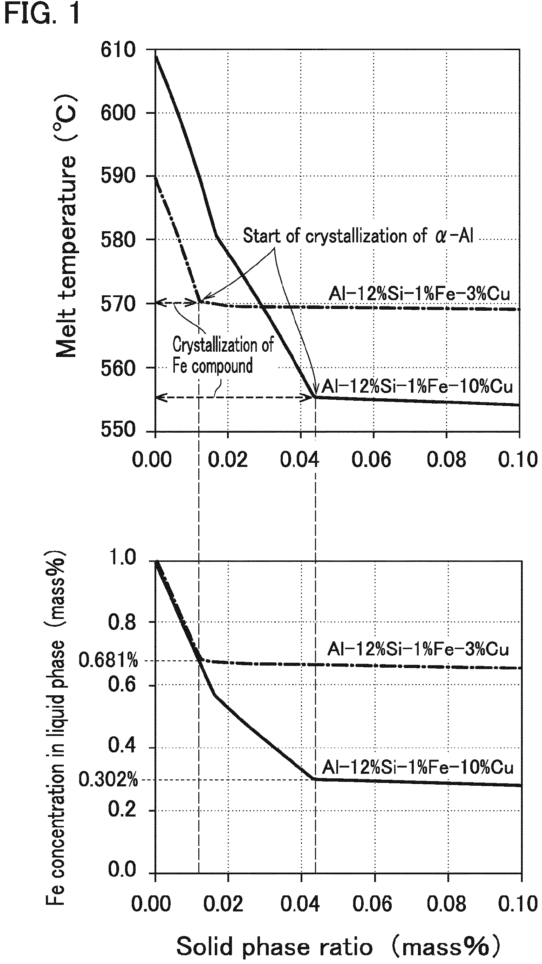

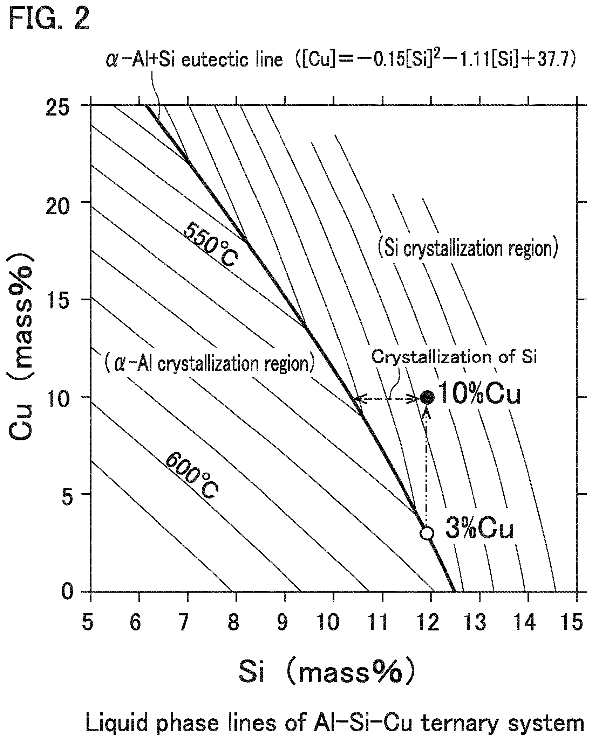

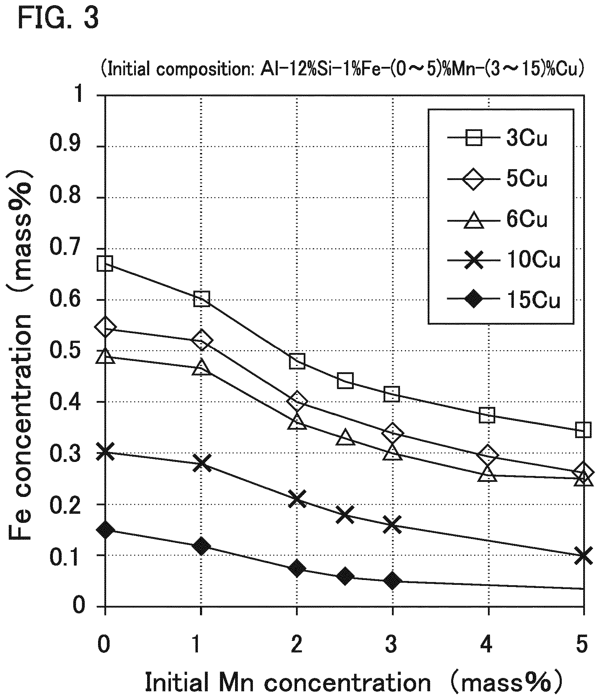

The principle of Fe and Si removal by the recycling method of the present invention will be described with reference to FIGS. 1 to 3. FIGS. 1 to 3 illustrate the results of calculation using analysis software ("Thermo-Calc" available from Thermo-Calc Software AB). FIGS. 1 and 3 are based on the Scheil calculation and FIG. 2 is based on the equilibrium calculation.

### (1) Fe Removal

For an Al-12%Si-1%Fe-3%Cu alloy melt (simply referred to as "3%Cu melt") and an Al-12%Si-1%Fe-10%Cu alloy melt (simply referred to as "10%Cu melt"), FIG. 1 illustrates the relationship between a melt temperature or an Fe concentration in a liquid phase and a solid phase ratio.

As apparent from FIG. 1, in the case of the 3%Cu melt, the melting point of an Fe compound (intermetallic compound) is low, and the Fe concentration after the removal remains at 0.681%. On the other hand, in the case of the 10%Cu melt, the melting point of an Fe compound is high, and the crystallization temperature of an Al phase (a-Al) is low. For this reason, the Fe concentration in a (second) melt after the removal of an unmelted solid such as an Fe compound or iron scrap can be significantly reduced to 0.302%. The Fe compound has a larger specific gravity than that of the melt and therefore settles out to a lower layer region of the melt, and the Fe compound and the melt can readily be separated. Thus, according to the present invention, Fe as an impurity can be efficiently removed as the Fe compound. Moreover, even when the unmelted solid such as iron scrap comes into contact with the melt, Fe cannot be melted in the melt. An Al alloy melt (second melt) can therefore be obtained with a sufficiently reduced Fe concentration.

The Fe compound as referred to in the present specification is not limited in its composition and form, provided that the Fe compound is a compound that contains Fe (e.g., an intermetallic compound that contains Fe). Representative Fe compounds include, for example, Al₉Fe₂Si₂ and Al₅FeSi.

### (2) Si removal

FIG. 2 illustrates a partially enlarged Al-Si-Cu ternary phase diagram (liquid phase surface). Isothermal lines in FIG. 2 indicate the temperature at which a Si phase or an α-Al phase crystallizes as the primary crystal. In the composition on the α-Al+Si eutectic line, the α-Al phase and the Si phase simultaneously crystallize. As apparent from FIG. 2, it is found that when the Cu concentration is changed from 3% to 10% in a 12%Si alloy melt, for example, Si preferentially crystallizes prior to the α-Al phase. The crystallized Si has a lower specific gravity than that of the melt and therefore floats in an upper layer region of the melt and can readily be separated. Thus, according to the present invention, excess Si can be efficiently removed, and the Al alloy melt (second melt) can be obtained with a reduced Si concentration.

### (3) Mn concentration

For Al-12%Si-1%Fe-(0-5)%Mn-(3-15)%Cu alloy melts having different initial Mn concentrations and Cu concentrations, FIG. 3 illustrates the relationship between the Mn concentration and the critical concentration of Fe that can be melted in the melt (simply referred to as a "critical Fe concentration" or an "Fe concentration). As apparent from FIG. 3, it is found that as the Mn concentration increases, the critical Fe concentration (so-called solubility limit) decreases and the Fe concentration in the melt can be reduced.

Moreover, as the Cu concentration increases, the critical Fe concentration significantly decreases. It is thus found that the Fe concentration in the melt can be further reduced by adding Mn to the melt in addition to Cu. In consideration of this, the Mn concentration in the first melt is preferably set to, for example, 1% or more in an embodiment or 2% or more in another embodiment. In the invention, the Cu concentration in the first melt is set to 4% or more. Preferably, the Cu concentration is 7% or more.

### «Preparation Step»

(1) At least part of an Al alloy raw material is melted to prepare a first melt having desired concentrations of Cu and Si. In this preparation, after analyzing the melt component of the melted Al alloy raw material, at least an appropriate amount of a Cu source raw material (e.g., pure Cu, a Cu alloy, or a Cu compound) may be added to the melt to adjust the composition of the first melt. The melting temperature (first melt temperature) may be a temperature at which the raw material as a whole is melted, but when Al alloy scrap is used, the melting temperature may be a temperature at which iron scrap or the like remains unmelted so as to be readily separated. For example, the melting temperature may be set to about 540°C to 750°C in an embodiment or about 580°C to 610°C in another embodiment.

In the preparation step, it is necessary that the first melt is finally obtained to have a hypereutectic composition of Cu and Si. The "hypereutectic composition" as referred to in the present specification falls within a composition range in which the Si phase crystallizes prior to the α-Al phase when the melt is cooled. In FIG. 2, the Si crystallization region corresponds to the hypereutectic composition. The hypereutectic composition is expressed by a formula ([Cu]≥-0.15[Si]²-1.11[Si]+37.7). The α-Al crystallization region in the figure refers to a composition range in which the α-Al phase crystallizes prior to the Si phase, which is called a "hypoeutectic composition."

(2) It is preferred to mainly use Al alloy scrap as the Al alloy raw material. The Al alloy raw material may be a cast material or may also be a wrought material. In the recycling method of the present invention, however, the Al alloy melt (second melt) which contains Si within a desired range is extracted from the first melt having a hypereutectic composition of Si. Usually, therefore, scrap of an Al alloy cast material that contains a large amount of Si is preferred as the Al alloy raw material. The Al alloy cast material may be any of cast materials such as those obtained by die casting, gravity casting, and lowpressure casting. In an embodiment, the Al alloy raw material may be combined with a member or the like composed of a metal other than an Al alloy (e.g., a steel material).

### «Holding Step»

The first melt obtained in the preparation step is held at a temperature at which Si and an Fe compound crystallize and the solid phase and the remaining liquid phase can be separated. In this operation, if the first melt is cooled to a temperature at which α-Al crystallizes, it becomes difficult to efficiently separate the crystallized Si and the crystallized Fe compound. The first melt may therefore be held at a temperature (separation temperature) within a temperature range in which Al does not crystallize but Si and an Fe compound crystallize. The separation temperature can be adjusted in accordance with the alloy composition of the first melt and is preferably set to, for example, (crystallization start temperature of α-Al)+(5°C to 30°C in an embodiment or 10°C to 20°C in another embodiment). More specifically, the separation temperature may be adjusted within a range of, for example, 540°C to 570°C in an embodiment or 550°C to 560°C in another embodiment.

The holding step is preferably a slow cooling step in order to promote crystallization of Si and an Fe compound and their grain growth. For example, the slow cooling is preferably performed at a cooling rate of 0.1°C/min to 2°C/min in an embodiment or 0.5°C/min to 1°C/min in another embodiment. The cooling rate as referred to herein is an average value obtained by dividing the temperature difference by the required time from the start of the holding step to the start of the subsequent extraction step. In an embodiment, a holding time may be provided at a temperature within a temperature range from the initial temperature of the first melt to the separation temperature to promote the crystallization of Si and an Fe compound and to coarsen the Si and the Fe compound. The holding step in this case is a slow cooling step in which the cooling rate is more reduced in accordance with the holding time.

### «Extraction Step»

By removing at least part of the Si and Fe compound crystallized from the first melt, the second melt can be obtained with reduced concentrations of Si and Fe. Extraction of the second melt can also be performed by removing the Si and Fe compound as solid phases from a crucible filled with the melt using a filter or the like. Here, the crystallized Si (solid phase Si) having a specific gravity smaller than that of the melt tends to float in the melt upper layer while the Fe compound having a specific gravity larger than that of the melt tends to settle out to the melt lower layer. Extraction of the second melt may therefore be performed by taking out only the melt having reduced concentrations of Si and Fe from the middle (middle layer region) of the crucible filled with the melt. In any case, this step of extracting the second melt in the liquid phase may be performed at a temperature within a temperature range similar to that of the separation temperature. The extraction step may preferably include removing a residual solid that was not melted in the preparation step (e.g., iron scrap and the like contained in part of the Al alloy raw material).

The extracted second melt is preferably used in a casting step or the like without being solidified. The second melt may be further refined before casting and/or adjusted to a desired component by adding pure Al (virgin ingot) and/or an alloy source (a component adjustment step). As will be understood, the second melt may also be once solidified and then supplied as a recycled ingot to be the raw material of a cast material or a wrought material.

### [Examples]

On the assumption of the first melt as referred to in the present invention, an Al alloy melt containing Si, Fe, and Cu was prepared. Metallographic structure observation and component measurement were performed using a sample obtained by solidifying the melt extracted from each layer region. The present invention will be described in more detail with reference to such specific examples.

### «Production of Samples»

### (1) Preparation Step

Raw materials were put in a graphite crucible (height 158 mm×upper diameter 120 mm×bottom diameter 80 mm, upper thickness 11 mm) and heated to 700°C to melt. The raw materials were compounded such that the alloy composition of the melt would be Al-12%Si-1%Fe-10%Cu. Thus, an initial melt (first melt) of about 1.5 kg was prepared.

Part of the initial melt was poured into a mold for analysis (ϕ40 mm×30 mm) and placed to be cooled and naturally solidified in a room. Sample 0 for initial melt analysis was thus obtained.

### (2) Holding Step

The initial melt was cooled in a furnace to 560°C (crystallization start temperature of α-Al plus 5°C) for 90 minutes. From the melt after cooling, the melt in each region of the upper layer part, middle layer part, and lower layer part was extracted and solidified as follows.

The upper layer part (surface layer portion having a thickness of about 10 mm) of the melt was collected with a spoon and naturally solidified in a mold for analysis (ϕ40 mm× 30mm). Sample 1 for upper layer part analysis was thus obtained.

The melt after removing the upper layer part was poured into a test material production mold (about 30 mm×40 mm×200 mm) for sampling a mold test piece as described in JIS H5202: 2010 and naturally solidified. Sample 2 for middle layer part analysis was thus obtained.

The solidified part remaining at the bottom of the crucible after pouring the melt of the middle layer part was cooled in the room with the crucible and solidified. Sample 3 for lower layer part analysis was thus obtained.

### «Analysis of Samples»

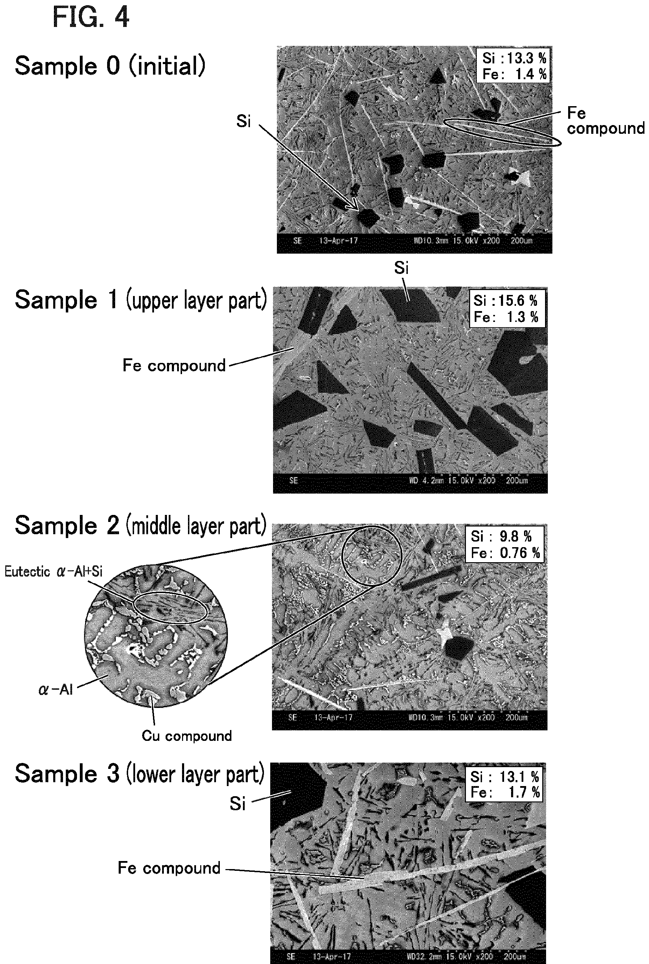

The cross section of each sample was observed for its structure with a scanning electron microscope (SEM), and the Si concentration and the Fe concentration were analyzed with ICP emission spectrometry. The results are listed together in FIG. 4. The observation and analysis of Samples 0 to 2 were performed on the center part (ϕ20 mm) of the horizontal cross section at the position of a height of 10 mm from the sample bottom surface. The observation and analysis of Sample 3 were performed on the center part (ϕ20 mm) of the horizontal cross section at the position of a height of 5 mm from the sample bottom surface.

### «Evaluation»

As apparent from FIG. 4, it is found that the Si concentration (composition) is higher and a larger amount of Si crystallizes in Sample 1 of the upper layer part than in Sample 0 of the initial state. In Sample 3 of the lower layer part, it is found that a large amount of an Fe compound crystallizes and the Fe concentration (composition) is high. In Sample 2, which is the middle between them, it is found that there is almost no crystallization of Si and a Fe compound and the Si concentration and the Fe concentration are significantly reduced. Specifically, in the middle layer part, the Si concentration is reduced from 13.3% (initial) to 9.8% and the Fe concentration is reduced from 1.4% (initial) to 0.76%.

From the above, it has been confirmed that according to the recycling method of the present invention, a recycled Al alloy (melt) having a sufficiently reduced Si concentration and a sufficiently reduced Fe concentration can be obtained from an Al alloy raw material such as scrap.

## Claims

1. A recycling method for an aluminum alloy, comprising:
a preparation step of melting at least part of an Al alloy raw material to prepare a first melt having a hypereutectic composition of Cu and Si, as expressed by a formula [Cu]≥-0.15[Si]²-1.11[Si]+37.7;
a holding step of holding the first melt at a separation temperature at which Si and an Fe compound crystallize; and
an extraction step of extracting a second melt obtained by removing at least part of the Si and Fe compound crystallized from the first melt,
wherein the first melt contains 4 mass% or more of Cu with respect to the first melt as a whole.

2. The recycling method for an aluminum alloy according to claim 1, wherein the first melt contains 1 mass% or more of Mn with respect to the first melt as a whole.

3. The recycling method for an aluminum alloy according to any one of claims 1 to 2, wherein the first melt contains 11 mass% or more of Si with respect to the first melt as a whole.

4. The recycling method for an aluminum alloy according to any one of claims 1 to 3, wherein the Al alloy raw material contains scrap of an Al alloy cast material.

5. The recycling method for an aluminum alloy according to any one of claims 1 to 4, wherein the holding step includes cooling at a cooling rate of 0.1°C/min to 2°C/min.

## Patentansprüche

1. Recyclingverfahren für eine Aluminiumlegierung, mit:
einem Vorbereitungsschritt zum Schmelzen mindestens eines Teils eines Aluminiumlegierungsrohmaterials zum Bereitstellen einer ersten Schmelze mit einer übereutektischen Zusammensetzung aus Cu und Si, ausgedrückt durch eine Formel [Cu]≥-0.15[Si]²-1.11[Si]+37.7;
einem Halteschritt zum Halten der ersten Schmelze bei einer Trenntemperatur, bei der Si und eine Fe-Verbindung kristallisieren; und
einem Extraktionsschritt zum Extrahieren einer zweiten Schmelze, die durch Entfernen mindestens eines Teils des Si und der Fe-Verbindung, die aus der ersten Schmelze auskristallisiert sind, erhalten wird,
bei dem die erste Schmelze 4 Massen-% oder mehr an Cu in Bezug auf die erste Schmelze als Ganzes enthält.

2. Recyclingverfahren für eine Aluminiumlegierung nach Anspruch 1, bei dem die erste Schmelze 1 Massen-% oder mehr an Mn in Bezug auf die erste Schmelze als Ganzes enthält.

3. Recyclingverfahren für eine Aluminiumlegierung nach einem der Ansprüche 1 bis 2, bei dem die erste Schmelze 11 Massen-% oder mehr an Si in Bezug auf die erste Schmelze als Ganzes enthält.

4. Recyclingverfahren für eine Aluminiumlegierung nach einem der Ansprüche 1 bis 3, bei dem das Aluminiumlegierungsrohmaterial Reste eines Aluminiumlegierungsgussmaterials enthält.

5. Recyclingverfahren für eine Aluminiumlegierung nach einem der Ansprüche 1 bis 4, bei dem der Halteschritt Kühlen mit einer Kühlrate von 0,1° C/min bis 2° C/min. beinhaltet.

## Revendications

1. Procédé de recyclage d'un alliage d'aluminium, comprenant :
une étape de préparation consistant à faire fondre au moins une partie d'une matière première d'alliage Al pour préparer un premier métal liquide ayant une composition hypereutectique de Cu et Si, telle qu'exprimée par une formule [Cu]≥-0,15[Si]²-1,11[Si]+37,7;
une étape de maintien consistant à maintenir le premier métal liquide à une température de séparation à laquelle Si et un composé de Fe cristallisent ; et
une étape d'extraction consistant à extraire une seconde masse fondue obtenue en éliminant au moins une partie du composé Si et Fe cristallisé à partir du premier métal liquide,
dans lequel le premier métal liquide contient 4 % en masse ou plus de Cu par rapport au premier métal liquide dans son ensemble.

2. Procédé de recyclage d'un alliage d'aluminium selon la revendication 1,
dans lequel le premier métal liquide contient 1 % en masse ou plus de Mn par rapport au premier métal liquide dans son ensemble.

3. Procédé de recyclage d'un alliage d'aluminium selon l'une quelconque des revendications 1 à 2, dans lequel le premier métal liquide contient 11 % en masse ou plus de Si par rapport au premier métal liquide dans son ensemble.

4. Procédé de recyclage d'un alliage d'aluminium selon l'une quelconque des revendications 1 à 3, dans lequel la matière première d'alliage Al contient des déchets d'un matériau coulé d'alliage Al.

5. Procédé de recyclage d'un alliage d'aluminium selon l'une quelconque des revendications 1 à 4, dans lequel l'étape de maintien comprend un refroidissement à une vitesse de refroidissement de 0,1 °C/min à 2 °C/min.
